# EUROPEAN PATENT SPECIFICATION

(11) **EP 4 246 003 B1**
(45) Date of publication and mention of the grant of the patent: **15.10.2025**
(21) Application number: 22162526.2
(22) Date of filing: 16.03.2022
(51) Int. Cl.: F16B 9/00, F16B 19/05

(54) **A RIVET, A BUSBAR JOINT OF ELECTRICAL CABINETS COMPRISING A RIVET**
NIET, SAMMELSCHIENENVERBINDER FÜR ELEKTROSCHRÄNKE, DIE EINEN NIET UMFASSEN
RIVET, JOINT DE BARRE DE BUS D'ARMOIRES ÉLECTRIQUES COMPRENANT UN RIVET

(43) Date of publication of application: 20.09.2023
(73) Proprietor: ABB SCHWEIZ AG, 5400 Baden (CH)
(72) Inventor: Wywrot, Maciej, 34-100 Wadowice (PL); Sadowski, Mateusz, 26-015 Pierzchnica (PL)
(74) Representative: AOMB Polska Sp. z.o.o.

(56) References cited:
- FR-A1- 2 282 563
- US-A- 2 274 422
- US-A- 5 125 778

## Description

### TECHNICAL FIELD

The present disclosure relates to an electrical joint used to connect busbars and method to making it.

### BACKGROUND OF THE DISCLOSURE

The standard joints, also suitable for busbar connection, are known. Those standard joints require bolted elements or rivets as well. They require maintenance and their assembly is time-consuming.

Standard bus bars joint uses bolts, nuts and washers. Such connections require maintenance and service consisting of checking torque. Standard usage of rivets also addresses another issue, like time consuming to assemble, time-consuming form quality perspective (at least two torque checks in the process) and lack of vibrations resistance without additional features. Generally, standard joints require multiple parts and quality of joints dependents on workers' skills and experience. A conical collar ensures proper surface pressures. Maintaining a constant pressure is important issue. The electrical resistance, heat generation in a joint and thermal resistance of a joint depend on the pressure with which the conductive elements press against each other. The conductive elements are made of soft and thermally expandable materials. Too low a pressure force is undesirable due to the increased resistance value and heat generation and too much pressure will cause permanent deformation of the conductive elements. Electrical connectors are heated and cooled during work, which results in a changing the pressures having influence on the connector (bolt, rivet) and conductive elements. This is currently solved by using conical washers in bolted joints. It is not an optimal solution. The primary task of a conical washer in a bolted joint is to prevent loosening of the joint. Thermal expansion compensation is small and usually insufficient.

Document CN210201408U discloses a busbar connection anti-loosening structure in a power distribution cabinet. Relating to the technical field of busbars, the busbar connection anti-loosening structure in the power distribution cabinet comprises a busbar, the device comprises a right busbar group, one end of a bolt is movably connected with a nut, the outer side surface of the nut is movably connected with a fixed block, one side of the fixed block is fixedly connected with a threaded rod, one end of the threaded rod is provided with a rotator, one side of the rotator is provided with a threaded hole, and one end of the threaded rod is in threaded connection with the rotator. The busbar in the power distribution cabinet is connected with an anti-loosening structure. A fixed block, a threaded rod and a rotator are arranged in a matching manner; the nuts and the bolts at the joints of the busbar connection anti-loosening structure in the power distribution cabinet are fixed with each other. The busbar fixing device is simple in structure and convenient to use, does not loosen during use, and can fix nuts and bolts at small-thickness joints of busbars in the use process through the matched arrangement of the hexagonal fixing blocks and the tough clamps, thereby achieving the purpose of preventing the busbars from loosening.

Document CN205882618U discloses a female connection structure that arranges of regulator cubicle, including a plurality of female arranging, the connection square hole has been set up to female tip of arranging, overlap joint and fixed through fastener locking about adjacent female head and the tail of arranging, the fastener is established the half -round head square neck bolt in connecting the square hole and is fixed the nut on the half -round head square neck bolt including inserting. The utility model discloses a setting up on mother arranges and connecting the square hole and adopt the half -round head square neck bolt to come the female row of connection, because the half -round head square neck bolt can wholly block in connecting the square hole, conveniently screw up fixation nut, the difficult production in the female row junction of messenger is become flexible to the fastness of connection between female row has been guaranteed.

Document JP2009257557A discloses a rivet which can be prevented from loosening. There is provided a rivet for joining plate materials together. In the rivet, its head is formed of a shape protruding from an edge of a plate material on a side in contact with the head to a side where the other plate material is arranged. The part which protrudes from the edge of the plate material in the head of the rivet is provided with a supporting portion in contact with a surface of the other plate material. According to the structure like this, when a force getting away from the other plate material acts on the plate material in contact with the head of the rivet, the supporting portion of the rivet abuts against the other plate material to prevent the rivet from tilting and therefore the rivet can be prevented from loosening.

Document FR 2 282 563 A discloses a stud permitting a permanent elastic fixing between at least two sheets of material. The stud has a shank, and a head with a concave under surface and also has an annular groove at the other end. The stud is inserted through one or several sheets into a hole in a boss formed in the base sheet. To assemble the sheets together, the boss is placed in the conical depression of a mandrel and the stud head forced down with a punch. This action deforms the boss to fit the annular grooves and retains the stud in position. The stud may be formed with a number of smaller grooves instead of one large one.

Accordingly, it is a goal of the present disclosure to provide a one-element two-element rivet to create joint between electrical busbars. In order to eliminate joints maintenance, a usage of rivets has been proposed. The present invention allows a faster assembly, a quality control check incorporated in an assembly process and a quality control may be conducted by visual inspection of joint. The usage of this joint requires one or two-element fastener and is vibrant resistant. Fastening is performed by easy to operate tool which minimize an impact of skills or strength of a person who operates it on joints properties. The present invention comprises the rivet integrated with a conical washer. The invention may be fully used to compensate for a thermal expansion to maintain proper surface pressures.

Rivets are tightened with appropriate tooling and excess material is sheared off. That assures appropriate assembly force without need for additional quality check. Materials between a rivet head and a collar are pressed against each other and forms a joint of parameters no worse than in bolted connections. The rivet is combined with the conical/bevel washer. Such combination would minimize a negative impact of a thermal elongation on joint properties.

### SUMMARY OF THE DISCLOSURE

It is an object of the present disclosure to provide a rivet comprising a top head, a collar, and a pin. The top head is formed at a first end of the pin through the collar. The rivet is characterized in that the collar has a conical shape. An outer diameter of the collar is facing toward the pin, an inner space of the collar is inclined at a slight angle in relation to the pin, the collar is thinner than the top head and the collar is made such that is capable for elastic deformation during assembly and is configured to act as a spring, wherein the top head, the collar and the pin portion (3) constitute a single piece.

Preferably the pin has a deformed area, which forms preferably a thread or a rolling area, preferably the deformed area is placed at the first end of the pin or a second end of the pin.

It is yet another object of the invention to provide the use of rivet during connection of electric busbars. It is yet another object of the invention to provide an electrical busbar joint comprising at least one rivet according to claim 1 or 2, at least two electrical busbars, namely a first electrical busbar and a second electrical busbar, with a hole in each electrical busbar, electrically and mechanically connected with each other. The electrical busbar joint is characterized in each rivet comprises a bottom head. The bottom head is placed on a second end of the pin. The pin is placed into the holes of electrical busbars in such a way that the collar is in contact with the first electrical busbar and the bottom head is in contact with the second electrical busbar, wherein the collar is elastically deformed and is configured to act as a spring.

Preferably the pin has a deformed area, which forms preferably a thread or a rolling area, preferably the deformed area is placed at the first end of the pin or the second end of the pin.

Preferably the electrical busbar joint comprises three electrical busbars, where a third electrical busbar is placed between the first electrical busbar and the second electrical busbar.

Preferably the top head is attached to the pin, on the first end of the pin.

Preferably the bottom head is attached to the pin, on the second end of the pin.

Preferably part of the bottom head, which is in contact with the second electrical busbar, has conical shape and it is elastically deformed.

### BRIEF DESCRIPTION OF THE DRAWINGS

The disclosure will now be discussed with reference to the drawings, which show in:
Figure 1 depicts an electrical busbar joint comprising two electrical busbars with holes and a one-element rivet put throughout them in a section view,
Figure 2 depicts the one-element rivet in an isometric view,
Figure 3 depicts a first part of a two-elements rivet from a second embodiment of the invention in an isometric view,
Figure 4 depicts a second part of the two-elements rivet from the second embodiment in an isometric view,
Figure 5 depicts the second embodiment of the invention in a section view,

### DETAILED DESCRIPTION OF THE DISCLOSURE

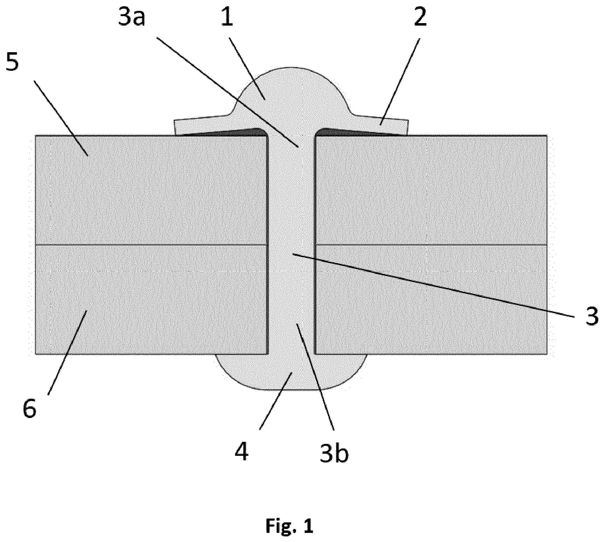

For a proper understanding of the disclosure, in the detailed description below corresponding elements or parts of the disclosure will be denoted with identical reference numerals in the drawings. The fig. 1 shows a first embodiment of the invention. An electrical busbar joint, suitable for electrical cabinets, comprising two electrical busbars, namely a first electrical busbar 5 and a second electrical busbar 6. There is a possibility to connect, for example, copper or aluminum bars in different combinations of those materials including joints with insulation support beams and other conducting elements. The first embodiment of the invention comprises one-element rivet where a top head 1 is connected to a collar 2. An outer diameter of the collar 2 faces a top wall of the first electrical busbar 5, towards a pin 3.

The collar 2 has a conical shape. In all embodiments, an outer diameter of the collar 2 faces the top wall of the first electrical busbar 5, towards the pin 3, while the pin 3 has its beginning in a center of outer diameter of the collar 2. On the outer diameter of the collar 2, on the opposite side of the pin 3, there is the top head 1 having a round shape. The outer diameter of the collar 2 touches the first electrical busbar 5, while an inner space of the collar, far from the outer diameter, is inclined at a slight angle in relation to the first electrical busbar 5. The person skilled in the art would know that other shapes providing the same functionality, that is acting as a spring while the top head 1 is elastically deformed, are also possible to manufacture. For example, the conical shape may end directly on the pin 3 or there may be other surface between the conical shape and the pin 3.

The primary function of a conical washer in a bolted joint is to prevent loosening of the joint. Thermal expansion compensation is small and usually insufficient. In addition, the washer is a separate element which makes assembling longer. The separate element also causes addition problem regarding storing, logistics and ordering.

In the present invention the washer, as the collar 2, is integrated with the rivet. A purpose of the collar 2 is to ensure appropriate surface pressures in the assembly determined by a characteristic of the elastic element. During an assembly the collar 2 is deformed such that it is elastically deformed. Tensions within the collar 2 provides a surface pressure on the first electrical busbar 5 which cause a good electrical connection between electrical busbars (5, 6). In the present invention the collar 2 act as a spring. Furthermore, the collar 2 is used to thermal expansion compensation to maintain appropriate surface pressures.

The pin 3 may have a deformed area 7, preferably in a shape of a thread or a rolling area. The deformed area makes a process of grabbing and assembling easier due to a firm grip of a tool which is easier to achieve. Furthermore, in the case of attached head, namely the top head 1 and/or the bottom head 4, the deformed area 7 provides better, more reliable connection between the pin 3 and the top head 1 and/or the bottom head 4.

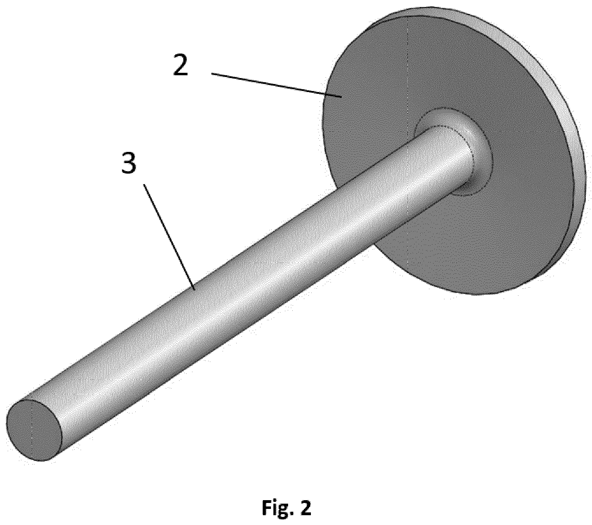

The fig. 2 shows the one-element rivet used in the electrical busbar joint, before the assembly. The one-element rivet is mounted as a standard rivet with the use of typical tools. As a result of the mounting, a bottom head 4 is created. The joint is made through at least two electrical busbars (5, 6) where the collar 2 is in contact with the first electrical busbar 5 and the bottom head 4 is in contact with the second electrical busbar 6. Preferably, there are more than two busbars e.g., three electrical busbars . The third one is placed between the first electrical busbar 5 and the second electrical busbar 6. Rivets are tightened using appropriate tooling and excess material is sheared off. Materials between the bottom head 4 and the collar 2 are pressed against each other..

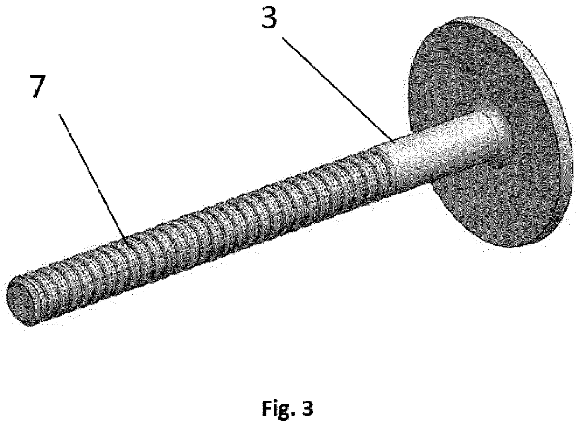

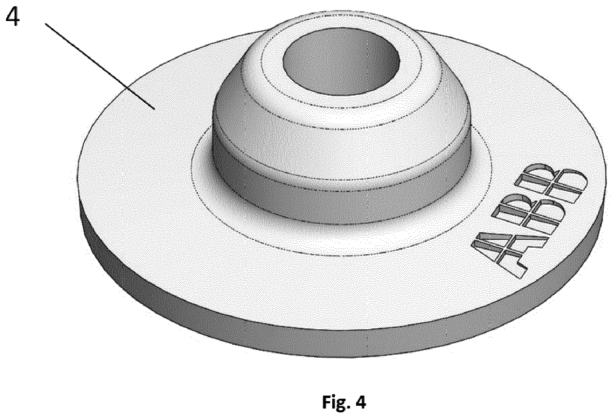

Figs. 3 and 4 shows the second embodiment of the invention, the two-element rivet, comprising the top head 1, connected to the pin 3, and the bottom head 4 which is a separate element. Fig. 3 shows the rivet in a second embodiment where the pin 3 has the deformed area 7, preferably in a shape of the thread or the rolling area. The position of this area is preferably placed at a first end 3a and/or at a second end 3b of the pin 3. The deformed area 7 allows a dedicated tool, during the assembly, to hold the pin 3 by the deformed area 7 and pull it in order to make a joint without a backlash and tear off the piece of deformed area during pulling.

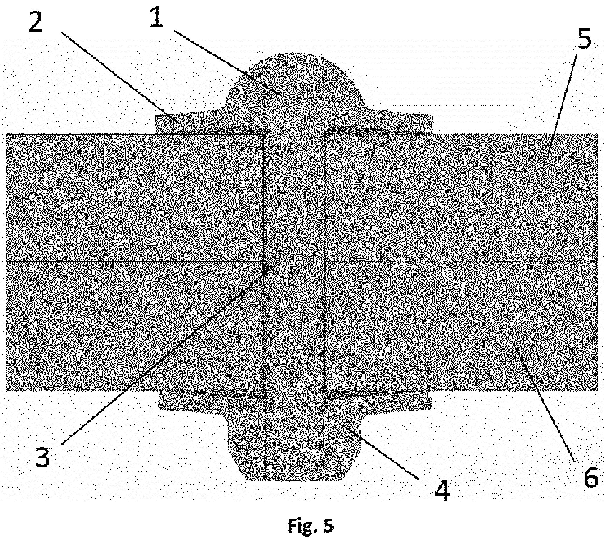

The fig. 5 shows the electrical busbar joint comprising at least two electrical busbars with usage of two-element rivet. Preferably, there are more than two busbars e.g., three electrical busbars. The third one is placed between the first electrical busbar 5 and the second electrical busbar 6. the top head 1 is attached to the pin 3 on the first end 3a of the pin 3 and the bottom head 4 is attached on the second end 3b of the pin. Preferably, the bottom head 4 has a conical shape and, during assembly, is in contact with the second electrical busbar 6, while being elastically deformed.

Another non-claimed embodiment comprises the pin 3 and the top head 1 and the bottom head 4 as separated elements. This embodiment allows for generating pressures with higher influence and having higher toleration for heat distortion.

According to the carried research, the mechanical and electrical results has been measured. Electrical resistance and thermal results suggest that riveted connection is no worse or even better than a bolted connection, while mechanical results suggests that riveted connection is better that the bolted connection. The material consumption grows but it takes less time to assembly. According to an assembly time measurements, the assembly with rivets is even 50% faster than the assembly with bolts. Faster time required to assemble joint is caused by eliminating tightening and torque check and reducing elements to one-element or two-element rivets.

A method of making the electrical busbar joint starts from a step a), inserting the rivet into the holes, created concentrically through electrical busbars 5, 6. There are at least two electrical busbars 5, 6, preferably three electrical busbars 5, 6. Insertion is made in such a way that the pin 3 is inserted into the holes and the second end 3b of the pin 3 is protruding beyond the last electrical busbar. In the next step, step b), stress is applied to the rivet and the collar 2 is elastically deformed. In the last, third, step c), the bottom head 4 is being made. The bottom head 4 is created at the second end 3b of the pin 3.

The method of making the electrical busbar joint with the one-element rivet starts from positioning the pin 3 having the collar 2 and the top head 1 and putting, in the first step a), the pin 3 through the holes in the electrical busbars 5, 6. A pressure is applied to the rivet, in the second step b), in such a way that the collar 2 is elastically deformed and the bottom head 4 is created in the third step c), at the second end 3b of the pin 3.

The assembly of the two-element rivet from the second embodiment of the invention starts from positioning the pin 3 having the collar 2 and the top head 1, with a separated bottom head 4. The pin 3 is put, in the first step a), through the holes in the electrical busbars 5, 6 and the bottom head 4 is put on the second end 3b of the pin, in the way that the bottom head 4 is in contact with the second electrical busbar 6. The protruding part of the second end 3b of the pin 3 is pulled to provide proper surface pressures by the elastically deformed collar 2 in the second step b) and, by applying stress in the third step c), the bottom head 4 is deformed such that it clamped on the second end 3b of the pin 3, preferably on the deformed area 7. The protruding part of the second end 3b is torn off.

There may be an additional step, the step a0), of creating the top head 1 and the collar 2 preferably before the first step of inserting the rivet into the holes in electric busbars (5, 6). During this additional step, the top head 1 and the collar 2 are created by applying stress to the top head 1, which is a separated part. Applied stress causes tightening the top head 1 on the first end 3a of the pin 3.

### LIST OF REFERENCE NUMERALS USED

- 1.: Top head
- 2.: Collar
- 3.: Pin
- 3a.: First end of pin
- 3b.: Second end of pin
- 4.: Bottom head
- 5.: First electrical busbar
- 6.: Second electrical busbar
- 7: Deformed area

## Claims

1. A rivet comprising a top head (1), a collar (2), a pin (3) wherein the top head (1) is formed at a first end (3a) of the pin (3) through the collar (2) wherein the collar (2) has a conical shape, wherein an outer diameter of the collar (2) is facing toward the pin (3), the collar (2) is made such that is capable for elastic deformation during assembly and is configured to act as a spring wherein the top head (1), the collar (2) and the pin portion (3) constitute a single piece, **characterized in that** an inner space of the collar (2) is inclined at a slight angle in relation to the pin (3) and **in that** the collar is thinner than the top head.

2. The rivet according to claim 1, **wherein** the pin (3) has a deformed area (7), which forms preferably a thread or a rolling area, preferably the deformed area (7) is placed at the first end (3a) of the pin (3) or a second end (3b) of the pin (3).

3. The use of rivet according to claim 1 during connection of electric busbars.

4. An electrical busbar joint comprising at least one rivet according to claim 1 or 2, at least two electrical busbars (5, 6), namely a first electrical busbar (5) and a second electrical busbar (6), with a hole in each electrical busbar (5, 6), electrically and mechanically connected with each other **characterized in that** each rivet comprises a bottom head (4) wherein the bottom head (4) is placed on a second end (3b) of the pin (3);
the pin (3) is placed into the holes of electrical busbars (5, 6) in such a way that the collar (2) is in contact with the first electrical busbar (5) and the bottom head (4) is in contact with the second electrical busbar (6), wherein the collar (2) is elastically deformed and is adjusted to act as a spring.

5. The electrical busbar joint according to claim 4, **wherein** the pin (3) has a deformed area (7), which forms preferably a thread or a rolling area, preferably the deformed area (7) is placed at the first end (3a) of the pin (3) or the second end (3b) of the pin (3).

6. The electrical busbar joint according to claim 4 or 5, **wherein** it comprises three electrical busbars (5, 6), where a third electrical busbar is placed between the first electrical busbar (5) and the second electrical busbar (6).

7. The electrical busbar joint according to anyone of claims 4-6, **wherein** the top head (1) is attached to the pin (3), on the first end (3a) of the pin (3).

8. The electrical busbar joint according to anyone of claims 4-7, **wherein** the bottom head (4) is attached to the pin (3), on the second end (3b) of the pin (3).

9. The electrical busbar joint according to claim 8, **wherein** part of the bottom head (4), which is in contact with the second electrical busbar (6), has conical shape and it is elastically deformed.

## Patentansprüche

1. Niet, bestehend aus einem oberen Kopf (1), einem Kragen (2) und einem Stift (3), wobei der obere Kopf (1) an einem ersten Ende (3a) des Stifts (3) durch den Kragen (2) hindurch ausgebildet ist, wobei der Kragen (2) eine konische Form aufweist, wobei ein Außendurchmesser des Kragens (2) zum Stift (3) hin ausgerichtet ist, der Kragen (2) so ausgebildet ist, dass er während der Montage elastisch verformbar ist und als Feder wirkt, wobei der obere Kopf (1), der Kragen (2) und der Stiftabschnitt (3) ein einziges Teil bilden, **dadurch gekennzeichnet, dass** ein Innenraum des Kragens (2) in Bezug auf den Stift (3) leicht geneigt ist und dass der Kragen dünner als der Kopf ist.

2. Niet gemäß Anspruch 1, **wobei** der Stift (3) einen verformten Bereich (7) aufweist, der vorzugsweise ein Gewinde oder einen Rollbereich bildet, wobei der verformte Bereich (7) vorzugsweise am ersten Ende (3a) des Stifts (3) oder am zweiten Ende (3b) des Stifts (3) angeordnet ist.

3. Verwendung des Niets gemäß Anspruch 1 beim Verbinden von elektrischen Stromschienen.

4. Elektrische Sammelschienenverbindung, die mindestens einen Niet gemäß Anspruch 1 oder 2, mindestens zwei elektrische Sammelschienen (5, 6), nämlich eine erste elektrische Sammelschiene (5) und eine zweite elektrische Sammelschiene (6), mit einem Loch in jeder elektrischen Sammelschiene (5, 6) umfasst, die elektrisch und mechanisch miteinander verbunden sind, **dadurch gekennzeichnet, dass** jedes Niet einen unteren Kopf (4) umfasst, wobei der untere Kopf (4) auf einem zweiten Ende (3b) des Stifts (3) angeordnet ist,
der Stift (3) so in die Löcher der elektrischen Sammelschienen (5, 6) eingesetzt ist, dass der Kragen (2) mit der ersten elektrischen Sammelschiene (5) in Kontakt steht und der untere Kopf (4) mit der zweiten elektrischen Sammelschiene (6) in Kontakt steht, wobei der Kragen (2) elastisch verformt und so eingestellt ist, dass er als Feder wirkt.

5. Elektrische Sammelschienenverbindung gemäß Anspruch 4, **wobei** der Stift (3) einen verformten Bereich (7) aufweist, der vorzugsweise ein Gewinde oder einen Rollbereich bildet, wobei der verformte Bereich (7) vorzugsweise am ersten Ende (3a) des Stifts (3) oder am zweiten Ende (3b) des Stifts (3) angeordnet ist.

6. Elektrische Sammelschienenverbindung nach Anspruch 4 oder 5, **wobei** sie drei elektrische Sammelschienen (5, 6) umfasst, wobei eine dritte elektrische Sammelschiene zwischen der ersten elektrischen Sammelschiene (5) und der zweiten elektrischen Sammelschiene (6) angeordnet ist.

7. Elektrische Sammelschienenverbindung nach einem der Ansprüche 4 bis 6, **wobei** der obere Kopf (1) am Stift (3) am ersten Ende (3a) des Stifts (3) befestigt ist.

8. Elektrische Sammelschienenverbindung nach einem der Ansprüche 4 bis 7, **wobei** der untere Kopf (4) am Stift (3) am zweiten Ende (3b) des Stifts (3) befestigt ist.

9. Elektrische Sammelschienenverbindung nach Anspruch 8, **wobei** ein Teil des unteren Kopfes (4), der mit der zweiten elektrischen Sammelschiene (6) in Kontakt steht, eine konische Form aufweist und elastisch verformt ist.

## Revendications

1. Rivet comprenant une tête supérieure (1), un collier (2), une goupille (3) dans lequel la tête supérieure (1) est formée à une première extrémité (3a) de la goupille (3) à travers le collier (2) dans lequel le collier (2) a une forme conique, dans lequel un diamètre extérieur du collier (2) est orienté vers la goupille (3), le collier (2) est fabriqué de manière à pouvoir se déformer élastiquement pendant l'assemblage et est configurée pour agir comme un ressort, la tête supérieure (1), la collier (2) et la partie de la goupille (3) constituant une seule pièce, **caractérisée par le fait qu'**un espace intérieur de la collier (2) est incliné à un léger angle par rapport à la goupille (3) et en ce que la collier est plus mince que la tête supérieure.

2. Rivet selon la revendication 1, **dans lequel** la goupille (3) a une zone déformée (7), qui forme de préférence un filet ou une zone de roulement, de préférence la zone déformée (7) est placée à la première extrémité (3a) de la goupille (3) ou à une deuxième extrémité (3b) de la goupille (3).

3. Utilisation du rivet selon la revendication 1 lors de la connexion de barres électriques.

4. Joint de barres électriques comprenant au moins un rivet selon la revendication 1 ou 2, au moins deux barres électriques (5, 6), à savoir une première barre électrique (5) et une deuxième barre électrique (6), avec un trou dans chaque barre électrique (5, 6), connectées électriquement et mécaniquement l'une à l'autre, **caractérisée en ce que** chaque rivet comprend une tête inférieure (4) dans laquelle la tête inférieure (4) est placée sur une deuxième extrémité (3b) de la goupille (3) ;
goupille (3) est placée dans les trous des barres électriques (5, 6) de manière à ce que le collier (2) soit en contact avec la première barre électrique (5) et que la tête inférieure (4) soit en contact avec la deuxième barre électrique (6), le collier (2) étant déformé de manière élastique et ajusté pour agir comme un ressort.

5. sJoint de barres électriques selon la revendication 4, **dans lequel** la goupille (3) a une zone déformée (7), qui forme de préférence un filet ou une zone de roulement, de préférence la zone déformée (7) est placée à la première extrémité (3a) de la goupille (3) ou à la deuxième extrémité (3b) de la goupille (3).

6. Joint de barres électriques selon la revendication 4 ou 5, **dans lequel** il comprend trois barres électriques (5, 6), une troisième barre électrique étant placée entre la première barre électrique (5) et la deuxième barre électrique (6).

7. Joint de barres électriques selon l'une des revendications 4 à 6, **dans lequel** la tête supérieure (1) est fixée à la goupille (3), sur la première extrémité (3a) de la goupille (3).

8. Joint de barres électriques selon l'une des revendications 4 à 7, **dans lequel** la tête inférieure (4) est fixée à la broche (3), sur la deuxième extrémité (3b) de la broche (3).

9. Joint de barres électriques selon la revendication 8, **dans lequel** une partie de la tête inférieure (4), qui est en contact avec la deuxième barre électrique (6), a une forme conique et est élastiquement déformée.
